# EUROPEAN PATENT SPECIFICATION

(11) **EP 0 413 144 B1**
(45) Date of publication and mention of the grant of the patent: **04.01.1995**
(21) Application number: 90113468.4
(22) Date of filing: 13.07.1990
(51) Int. Cl.: H01L 23/495, H01M 2/10

(54) **Connecting electrode**
Verbindungselektrode
Electrode de connexion

(30) Priority: 18.08.1989 JP 213569/89
(43) Date of publication of application: 20.02.1991
(73) Proprietor: MITSUBISHI DENKI KABUSHIKI KAISHA, Tokyo (JP)
(72) Inventor: Kasatani, Yasushi, c/o Mitsubishi Denki K.K., Itami-shi, Hyogo-ken (JP); Tachikawa, Toru, c/o Mitsubishi Denki K.K., Itami-shi, Hyogo-ken (JP)
(74) Representative: TER MEER STEINMEISTER & PARTNER GbR

(56) References cited:
- US-A- 4 718 742
- PATENT ABSTRACTS OF JAPAN vol. 008, no. 190 (E-263)31 August 1984 & JP-A-59 078 445 (SONY KK) 7 May 1984

## Description

### FIELD OF THE INVENTION

The present invention relates to a connecting electrode for electrically connecting an internal battery of e.g. a semiconductor device card.

### BACKGROUND OF THE INVENTION

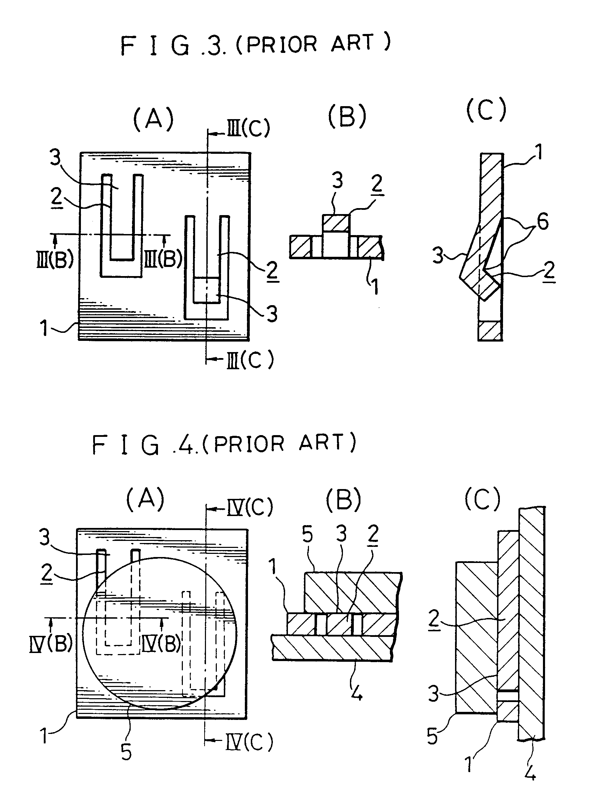

Figure 3 is a view showing a conventional connecting electrode used in a semiconductor device card, in which figure 3(A) is a plan view and figures 3(B) and 3(C) are sectional views taken along lines III(B) - III(B) and III(C) - III(C) in figure 3(A), respectively. In figure 3, reference numeral (1) designates a planar electrode substrate and reference numeral (2) designates a contact formed by two parallel cuts and a lateral cut connecting corresponding ends of said parallel cuts within said substrate, and formed of a spring material, which has a convex surface (3) at the free end of said contact, bent like a buttonhook and projecting from the electrode substrate (1). The electrode substrate (1) and the contact (2) construct the connecting electrode.

Figure 4 is a view in which the connecting electrode shown in figure 3 is mounted on a semiconductor device card and a battery is set. Figure 4(A) is a plan view thereof and figures 4(B) and 4(C) are sectional views taken along lines IV(B) - IV(B) and IV(C) - IV(C) in figure 4(A), respectively. Reference numeral (4) designates a frame of the semiconductor device card on which the electrode substrate (1) is mounted. Reference numeral (5) designates a battery pressed in the right direction in figure 4(C), that is, toward the convex surface (3) of the contact (2) by certain means (not shown).

Next, operation thereof will be described. When one electrode of the battery (5) (not shown) is pressed to the contact (2) bent like a buttonhook as shown in figures 3(B) and 3(C), the contact (2) receiving the pressed force extends its bending part (6) and finally deforms in a straight line, that is, it is completely compressed as shown in figures 4(B) and 4(C). Electrical connection between the battery (5) and the contact (2) is maintained by elastic force by which the contact (2) tries to return to the original shape of a buttonhook. The other electrode of the battery (5) (not shown) is appropriately connected and then electric power is supplied to an electric circuit (not shown) of the semiconductor device card.

Since the conventional connecting electrode is constructed as described above, the pressing force, generated when the battery is set completely, compresses the contact. At this time, excessive stress is generated thereon and contact pressure between the battery and the contact generated by elasticity of the contact is reduced due to fatigue or creep caused by oscillation. As a result, the battery is not in contact with the contact when it receives outer oscillation and then power supply is not applied to the electric circuit, causing stored information to be erased.

### SUMMARY OF THE INVENTION

The present invention was made to solve this problem and it is an object of the present invention to provide a connecting electrode in which contact pressure between a contact and a battery is maintained for a long time.

This object and other objects, features, aspects and advantages of the present invention will become more apparent from the following detailed description of the present invention when taken in conjunction with the accompanying drawings.

A connecting electrode in accordance with the present invention comprises at least one projection on that side of the surface of the electrode substrate which is on the side of the convex surface of the contact so that an amount of deformation of the contact is controlled when the contact is pressed by a battery.

According to the connecting electrode of the present invention, a battery abuts on the projection on the electrode substrate after it presses the contact and the contact deforms to some degree. Thus, pressing force from the battery is received by the projection. As a result, the contact does not deform more than that and it is prevented from being completely compressed, whereby stress is reduced. As a result, the contact pressure is maintained for a long time.

### BRIEF DESCRIPTION OF THE DRAWINGS

Figure 1(A) is a plan view showing a connecting electrode in accordance with an embodiment of the present invention;
Figures 1(B) and 1(C) are sectional views taken along lines I(B) - I(B) and I(C) - I(C) in figure 1(A), respectively;
Figure 2(A) is a plan view in which the connecting electrode shown in figure 1 is mounted on a semiconductor device card and a battery is set;
Figures 2(B) and 2(C) are sectional views taken along lines II(B) - II(B) and II(C) - II(C) in figure 2(A), respectively;
Figure 3(A) is a plan view showing a conventional connecting electrode;
Figures 3(B) and 3(C) are sectional views taken along lines III(B) - III(B) and III(C) - III(C) in figure 3(A), respectively;
Figure 4(A) is a plan view in which the connecting electrode shown in figure 3 is mounted on a semiconductor card and a battery is set; and
Figures 4(B) and 4(C) are sectional views taken along lines IV(B) - IV(B) and IV(C) - IV(C) in figure 4(A), respectively.

### DETAILED DESCRIPTION OF THE PREFERRED EMBODIMENTS

An embodiment of the present invention will be described in detail with reference to the drawings.

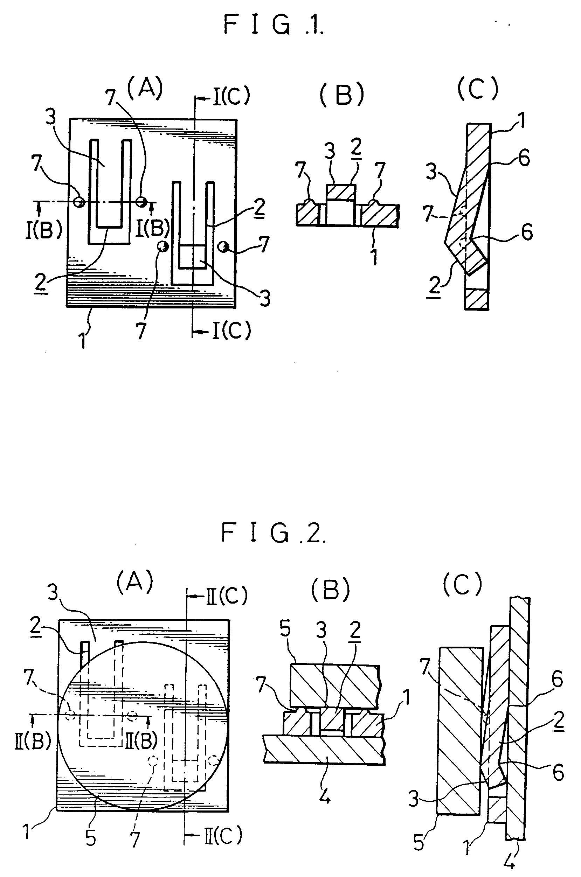

In figure 1, since reference numerals (1) to (3), and (6) designate the same parts as in a conventional example in figure 3, a description thereof is omitted. Reference numeral (7) designates projections provided respectively on an electrode substrate (1) on the both sides of the convex surface (3) of the contact (2).

Operation will be described with reference to figures 1 and 2 hereinafter. The electrode substrate (1) is mounted on the frame (4) of a semiconductor device. The battery (5) abuts on the contact (2) and then pressed in the right direction in the figure. Then, a bending part (6) of the contact (2) is bent by that pressed force and the contact (2) deforms. However, since the battery (5) abuts on the projection (7) after the contact (2) deforms to some degree, pressed force from the battery (5) is received by this projection (7). Therefore, the contact (2) does not deform more than that. More specifically, since an amount of deformation of the contact (2) is controlled by the projection, it does not deform in a straight line, that is, it is not completely compressed. As a result, stress of the contact (2) is reduced and reduction of elastic force of the contact (2) due to fatigue or creep is prevented.

Although there are two contacts (2) and the projection (7) is provided at each side of the contact (2) in the above embodiment, the number of these may be increased or decreased depending on a size of the battery or a structure of the electrode substrate.

## Claims

1. A connecting electrode comprising an electrode substrate (1) with a contact (2) formed by two parallel cuts and a cut connecting corresponding ends of these parallel cuts within said substrate, whereby the free end section of said contact has a convex surface (3) projecting from said electrode substrate and being pressed by a battery, **characterized by** at least one projection (7) provided on that side of the substrate from which the convex surface (3) of said contact projects, for controlling the amount of deformation of said contact.

## Patentansprüche

1. Anschlußelektrode mit einem Elektrodensubstrat (1) mit einem durch zwei parallele Einschnitte und einen entsprechende Enden dieser parallelen Einschnitte verbindenden Einschnitt innerhalb des Substrats gebildeten Kontakt (2), wobei der freie Endabschnitt des Kontakts eine konvexe Oberfläche (3) aufweist, die vom Elektrodensubstrat hochsteht und durch eine Batterie niedergedrückt wird, **gekennzeichnet durch** mindestens einen Vorsprung (7), der auf derjenigen Seite des Substrats vorhanden ist, von der die konvexe Oberfläche (3) des Kontakts vorspringt, um das Ausmaß der Verformung des Kontakts zu kontrollieren.

## Revendications

1. Electrode de connexion, comprenant un substrat (1) d'électrode avec un contact (2) formé par deux entailles parallèles et une entaille reliant des extrémités correspondantes de ces entailles parallèles dans ledit substrat, grâce à quoi la partie formant extrémité libre dudit contact a une surface convexe (3) qui fait saillie depuis ledit substrat d'électrode et sur laquelle appuie une batterie, caractérisée par au moins une saillie (7) présente sur la face du substrat depuis laquelle fait saillie la surface convexe dudit contact, pour commander l'ampleur de la déformation dudit contact.
